# EUROPÄISCHE PATENTSCHRIFT

(11) **EP 1 186 470 B1**
(45) Veröffentlichungstag und Bekanntmachung des Hinweises auf die Patenterteilung: **13.04.2005**
(21) Anmeldenummer: 01121098.6
(22) Anmeldetag: 03.09.2001
(51) Int. Cl.: B60P 7/12, F17C 13/08, B60P 3/055, B60P 3/24, B61D 45/00, B60P 7/08, B60P 7/13

(54) **Anhänger zum Transport von Gasflaschen mit hohem Betriebsdruck**
Trailer for transporting gas bottles with high service pressure
Remorque pour le transport de bouteilles de gaz à haute pression de service

(30) Priorität: 05.09.2000 DE 10043972; 01.06.2001 DE 20109176 U
(43) Veröffentlichungstag der Anmeldung: 13.03.2002
(73) Patentinhaber: Peters, Franz Gerd, 47533 Kleve (DE)
(72) Erfinder: Peters, Franz Gerd, 47533 Kleve (DE)
(74) Vertreter: Viering, Jentschura & Partner

(56) Entgegenhaltungen:
- EP-A- 0 138 799
- EP-A- 0 914 986
- US-A- 2 335 517
- US-A- 2 380 562
- US-A- 3 693 554
- US-A- 4 784 399
- US-A- 5 573 360

## Beschreibung

Die vorliegende Erfindung betrifft einen Anhänger zum Transport von Gasflaschen mit hohem Betriebsdruck, sowie ein Transportmodul für einen solchen Anhänger, gemäss den Merckmalen der Oberbegriffe der unabhängigen Ansprüche 1 und 13.

Derartige Sattelauflieger werden zum Transport von Gasen unter hohem Druck verwendet, bei denen ein Transport in Tankfahrzeugen wegen der erforderlichen Dicke des Tanks praktisch nicht mehr in Frage kommt. Bei einigen bekannten Einrichtungen zum Transport von Gasflaschen wird auf das Fahrgestell ein Hilfsrahmen mit einer Ladefläche gebaut. Auf diese Ladefläche wird ein Bündelgestell mit Flaschen gesetzt. Die Bündelgestelle sind meist aus Profilen gebildete Rahmen, in denen die Gasflaschen neben- und/oder übereinander liegen. Nachteilig bei den bekannten Einrichtungen ist deren verhältnismäßig hohes Eigengewicht, das aus der Verwendung eines Hilfsrahmens, eines Plateaus und dem massiven Aufbau der Bündelgestelle resultiert.

Aus der DE-A-2924953 ist es bekannt, Gasflaschen auf einer Ladefläche mittels Kabeln zu befestigen, die ein Flaschenbündel umschlingen und über elastische Spannorgane mit der Ladefläche verbunden sind.

In der US-A-2761397 ist ein Sattelauflieger zur Beförderung von Gasflaschen beschrieben, bei dem die an den Flaschen beidseitig angeordneten Hälse zwischen U-Eisen gehalten werden. Bei dieser bekannten Ausführung liegen die Flaschen im Abstand voneinander, die Haltung erfolgt im wesentlichen nur durch die U-Eisen, so dass diese mit den zugehörigen Verbindungsstücken sehr kräftig und damit schwer ausgebildet sein müssen.

Ein weiterer Anhänger oder Sattelauflieger zum Transport von Gasflaschen ist aus der EP-0138799 bekannt. So beschreibt die EP-0138799 eine Einrichtung zum Transport von Gasflaschen auf Lastfahrzeugen, bei der die Gasflaschen zu mindestens einem Bündel zusammengefasst sind, wobei die Füll- bzw. Auslassöffnungen der Gasflaschen über Verbindungsleitungen verbunden sind. Die Flaschen des Bündels sind dabei mittels umlaufender flexibler Spannorgane verspannt, und die Flaschenhälse ragen durch Öffnungen eines mehreren Flaschen zugeordneten Verbindungsstückes mit rinnenförmigem Querschnitt und sind in der Rinne, bzw. den Rinnen des Verbindungsstückes durch Muttern bzw. Keile oder dergleichen befestigt.

Aus FR 813 304 ist ein Transportfahrzeug für Gasflaschen bekannt, bei welchem die längs der Fahrtrichtung angeordneten Gasflaschen ebenfalls gruppenweise mittels metallischer Bänder zu einzelnen Paketen geschnürt sind und bei dem außerdem eine aufwendige Fachwerkskonstruktion zur Halterung der Gasflaschen vorgesehen ist.

Ein weiterer Auflieger für zylindrische Gasbehälter ist in der EP-456191 beschrieben. Die darin beschriebene Lösung betrifft einen Anhänger für Behälter mit einem Tragarm und einer Mehrzahl von Modulen, bei denen jedes mit einer Mehrzahl von zylindrischen Fluidbehältern versehen ist, die an vorderen und hinteren Schotten gehalten werden.

Aus der gattungsbildenden US 2,380,562 ist ein Transportfahrzeug bekannt, bei dem auf einem horizontalen Tragrahmen eine Mehrzahl von mit Anschlussarmaturen versehenen Gasflaschen in horizontalen Lagen auf dem Tragrahmen aufliegen, wobei zwei horizontal benachbarte Lagen der Gasflaschen so gegeneinander versetzt sind, dass die Gasflaschen der oberen Lage in den zwischen den Gasflaschen der unteren Lage gebildeten Vertiefungen zu liegen kommen.

Den oben beschriebenen Sattelaufliegern ist gemeinsam, dass auf diesen die Gasflaschen liegend mit der Längsachse der Gasflasche in Fahrtrichtung transportiert werden.

Ein senkrechter Transport der Gasflaschen ist in der EP-0914986 beschrieben. Der dort erwähnte Sattelauflieger besitzt dabei einen sich über die Gesamtlänge des Sattelaufliegers erstreckenden Fachwerkrahmen mit Einrichtungen zum lotrechten Aufstellen der Gasflaschen, wobei der Fachwerkrahmen als Fachwerkträger ausgebildet ist, der an seinen beiden äußeren Längsseiten einen unteren und einen oberen Längsträger aufweist, die über die Gesamtlänge durch Vertikalstreben und Diagonalstreben verbunden sind. Ein senkrechter Transport von Flaschen ist ferner aus FR 21 29 090 bekannt. Hierbei ist jedoch keinerlei Halterung der Flaschen vorgesehen, so dass infolge der geringen Stabilität der Anordnung nur eine sehr geringe Anzahl von Flaschen transportiert werden kann.

Des weiteren ist aus US 2,335,517 eine Vorrichtung zum Transport von Spulen mit darauf aufgewickeltem Faser- oder bahnartigem Material bekannt, wobei die Spulen senkrecht zur Fahrtrichtung des die Vorrichtung tragenden Transportfahrzeugs angeordnet sind.

Allen im Stand der Technik bekannten Transportanhängern zum Transport von Gasflaschen mit hohem Betriebsdruck ist gemeinsam, dass diese aufgrund der Anordnung der Gasflaschen zueinander und der zumeist verwendeten Fachwerkrahmen oder Halterungen ein erhebliches Leergewicht aufweisen und nur eine begrenzte Zuladung ermöglichen. In der Regel beträgt bei einem derartigen Sattelauflieger mit einem zulässigen Gesamtgewicht von 40 Tonnen das Gewicht des Aufliegers und der angebrachten Flaschen, Rahmen, etc. etwa 39,5 Tonnen, so dass eine Nutzlast von ca. 500 kg an Wasserstoffgas zulässig ist.

Es sind Anstrengungen unternommen worden, das Leergewicht der Gasflasche dadurch zu verringern, dass anstelle einer nur aus Stahl bestehenden Gasflasche eine Kompositflasche aus Stahlkern mit einer Kunststoffummantelung bereitgestellt werden. Derartige Flaschen haben bereits Einsatz gefunden in Transportanhängern zum Transport von Gasen, wie beispielsweise in der WO 95/29824 offenbart. Jedoch werden auch bei dieser Lösung aufwendige und schwere Fachwerkkonstruktionen oder Halterungen verwendet.

Es besteht daher ein Bedarf an Anhängern, bei denen ein besseres Verhältnis von Nutzlastgewicht zum Eigengewicht des Anhängers gegeben ist.

Die Aufgabe der Erfindung besteht somit darin, einen Anhänger zum stabilen Transport von Gasflaschen mit hohem Betriebsdruck sowie ein Transportmodul für einen solchen Anhänger bereitzustellen, wobei bei verringertem Leergewicht des Anhängers eine höhere Nutzlast an zu transportierendem Gas ermöglicht wird.

Die Aufgabe der Erfindung wird gelöst durch Bereitstellung eines Anhängers bzw. eines Transportmoduls mit den Merkmalen des unabhängigen Anspruchs 1 bzw. 13.

Ein erfindungsgemäßer Anhänger zum Transport von Gasflaschen mit hohem Betriebsdruck weist auf:
einen horizontalen Tragrahmen mit Längskanten und zur Fahrtrichtung des Anhängers senkrechten Querkanten;
wenigstens zwei jeweils endseitig an den Querkanten am Tragrahmen vorgesehene Vertikalstrebenpaaren oder -platten;
eine Mehrzahl von mit Anschlussarmaturen versehenen und über Verbindungsleitungen miteinander verbundenen zylindrischen Gasflaschen; und
Verspannmittel zum Verspannen der Gasflaschen am Tragrahmen und gegeneinander,
wobei die Gasflaschen in horizontalen Lagen zwischen den Vertikalstrebenpaaren oder -platten auf dem Tragrahmen aufliegen, wobei zwei horizontal benachbarte Lagen der Gasflaschen so gegeneinander versetzt sind, dass die Gasflaschen der oberen Lage in den zwischen den Gasflaschen der unteren Lage gebildeten Vertiefungen zu liegen kommen, und
wobei die Gasflaschen senkrecht zur Fahrtrichtung des Anhängers angeordnet sind, wobei nur die zwischen den Vertikalstrebenpaaren oder -platten in der obersten Lage angeordneten Gasflaschen mittels eines Trägers zur Ausbildung einer starren Einheit lösbar miteinander verbunden sind.

Infolge dieser "wabenartigen" Anordnung der Gasflaschen senkrecht zur Fahrtrichtung wird die Stabilität der Gasflaschenanordnung gegenüber herkömmlichen Anordnungen soweit verbessert, dass aufwendige und schwere Fachwerkkonstruktionen entbehrlich sind, so dass das Verhältnis zwischen Nutzlastgewicht und Eigengewicht wesentlich verbessert wird.

Die Trägervorrichtung ist bevorzugt als U-Träger ausgebildet.

Gemäß einer bevorzugten Ausführungsform umfasst die Trägervorrichtung zwei U-Träger, die an einander gegenüberliegenden Längsenden der betreffenden Gasflaschen ausgebildet sind.

Die durch die Trägervorrichtung gebildete starre Einheit aus den Gasflaschen der obersten Lage bewirkt - in Kombination mit der wabenartigen und zur Fahrtrichtung senkrechten Gasflaschenanordnung - eine signifikante Erhöhung der Stabilität der Gasflaschenanordnung. Infolgedessen kann auch bei lediglich zwei Vertikalstrebenpaaren oder -platten z.B. am in Fahrtrichtung vorderen und hinteren Ende des Anhängers (und ohne aufwendige Fachwerkskonstruktion) ein starrer und stabiler Verbund aus einer erheblichen Anzahl (d.h. mehrere hundert) Gasflaschen transportiert werden. Hierdurch wird das Verhältnis von Nutzlastgewicht zum Eigengewicht des Anhängers weiter verbessert.

Der durch den Träger gebildete starre Verbund hat weiter den Vorteil, dass die Gasflaschen der obersten Lage nicht einzeln be- oder entladen werden müssen, sondern gemeinsam mit dem Träger von dem Anhänger mittels eines geeigneten Hebefahrzeugs abgehoben oder auf diesen aufgeladen werden können.

Ferner kann beispielsweise nach dem Abheben und Entladen der Gasflaschen der obersten Lage mittels der Trägervorrichtung (z.B. des U-Trägers) diese Tragvorrichtung auf die nächste darunter liegende Lage von Gasflaschen aufgesetzt werden, um so nacheinander sämtliche Gasflaschen zu entladen. Der umgekehrte Prozess kann entsprechend beim Beladen des Anhängers durchgeführt werden. In beiden Fällen wird die zum Be- bzw. Entladen des Anhängers erforderliche Zeit erheblich reduziert.

Gemäß einer bevorzugten Ausführungsform sind die Vertikalstrebenpaare oder -platten in Fahrtrichtung des Anhängers verschiebbar, z.B. in hierfür am Tragrahmen vorgesehenen Führungen, am Tragrahmen befestigt. Hierdurch wird erreicht, dass auch im nachhinein noch zusätzliche Flaschen aufgeladen und mit der übrigen Gasflaschenanordnung stabil verbunden werden können.

Bevorzugt sind zwischen den Flaschen von in vertikaler Richtung benachbarten Lagen Abstandshalter vorgesehen, die eine geringe thermische Ausdehnung der Flaschen beim Befüllen oder während des Transportes, insbesondere bei Wärmeeinstrahlung, ausgleichen können. Bevorzugt bestehen diese Abstandshalter aus einem flexiblen Schaum, der in Form von Bändern oder Folien zwischen die Flaschen gelegt werden kann.

Obgleich der Anhänger in seiner einfachsten Form zumindest endseitig an beiden Seiten Vertikalstrebenpaare oder -platten aufweist, zwischen die die Gasflaschen lagenweise gelegt werden und durch die endseitigen Vertikalstreben oder Platten gehalten werden, ist es bevorzugt, dass entlang des Tragrahmens beabstandet mehrere Vertikalstreben oder Platten vorgesehen sind, die die Gesamtlänge des Tragrahmens in mehrere, bevorzugt gleichgroße Kompartimente unterteilen.

Dabei sind die Abstände zwischen den einzelnen Vertikalstreben bevorzugt so bemessen, dass sie einem Vielfachen des Flaschendurchmessers der Gasflaschen entsprechen.

Um eine sichere Lagerung zwischen den Vertikalstreben auf dem Trägerrahmen zu gewährleisten, werden die Flaschen innerhalb eines solchen Kompartiments mittels umlaufender, vorzugsweise flexibler Spannorgane verspannt, wobei die Spannorgane, beispielsweise umlaufende Flachbänder, vorzugsweise für jedes Kompartiment getrennt, mit ihren jeweiligen Enden am Tragrahmen befestigt sind.

Zur besseren Führung der vorzugsweise als Spannbänder ausgeführten Spannorgane können diese in Führungselementen geführt sein, die auf der dem Band abgewandten Seite dem Flaschendurchmesser, bzw. dem Raum zwischen den Flaschen angepasst die Flaschen zumindest teilweise umgreifen und im einfachsten Fall auf diese aufgelegt werden.

Die Gasflaschen sind in ihrer Länge derart bemessen, dass sie einschließlich der einseitig am Flaschenende vorgesehenen Ventile und Verbindungsstücke zwischen den Flaschen bzw. Verschlüsse nicht über den Tragrahmen seitlich hinausragen.

Die einzelnen Flaschen eines Kompartiments sind mit Ventilen versehen und untereinander über Verbindungsleitungen verbunden, und die Flaschen jedes Kompartimentes lassen sich insgesamt über einen Kompartiment-Haupthahn auf- und zudrehen.

Die Form und das Material der Gasflaschen ist nicht besonders beschränkt. Bevorzugt ist die Gasflasche in Form eines Zylinders gefertigt, der entweder ganz aus Stahl oder nach Art einer Kompositflasche aus einem Stahlkern mit einer Kunststoffummantelung besteht. Bevorzugt ist die Verwendung einer reinen, aus Kunststoff gefertigten Flasche, da bei Verwendung solcher Flasche das Verhältnis Nutzlast: Leergewicht des Anhängers weiter verbessert wird. Vorzugsweise sind alle Flaschen innerhalb eines Kompartiments so ausgerichtet, dass die entsprechenden Ventile und Verbindungsstücke zwischen den Flaschen sich auf einer Seite befinden, so dass die Verschlüsse auf der anderen Seite des Kompartiments angeordnet sind.

Zum Schutz der Ventile und der sonstigen Armaturen sind zwischen den Vertikalstreben anhängeraußenseitig vorzugsweise Sicherungsmittel vorgesehen, beispielsweise in Form von an den Vertikalstreben über Scharniere angeschlagenen Türen, die sich aus einer geschlossenen Fahrstellung (des Anhängers) seitwärts oder nach oben in eine Parkstellung öffnen lassen, oder in Form von in den Vertikalstreben geführten Sicherheitsrolladen, so dass die Armaturen und Verbindungsleitungen gegen eine mechanische Einwirkung von außen geschützt werden.

Obgleich in einer einfachen Ausführungsform der Erfindung die Vertikalstreben als einteilige Bauteile gefertigt sind, ist in einer bevorzugten Ausführungsform eine Vertikalstrebe in ihrer Längsrichtung zweigeteilt, und jede Vertikalstrebenhälfte an einer auf dem Tragrahmen lösbar befestigten Trägerplatte (Kompartimentbodenplatte) festgelegt, so dass ein einzelnes Flaschentransportmodul nach Lösen der Befestigung zwischen Trägerplatte und Tragrahmen und der Flaschentransportmodule untereinander mittels geeigneter Hebewerkzeuge vom Tragrahmen abgehoben werden kann.

Diese letztere Ausführungsform ermöglicht insbesondere, die Verweilzeiten des Anhängers an der Gasfüllstation für Wasserstoff, Propan, Erdgas etc. zu verringern, da die Flaschen der einzelnen Transportmodule vorgefüllt werden können und dann mittels eines Krans auf den Tragrahmen aufgesetzt und gesichert werden können, so dass dann lediglich die über den Haupthahn für das jeweilige Kompartiment schließbaren Hauptleitungen der einzelnen Kompartimente miteinander verbunden werden müssen. Auf diese Weise wird die Verweilzeit des Anhängers an der Füllstation erheblich vermindert.

Die Erfindung ist auch gerichtet auf ein Transportmodul für einen Anhänger zum Transport von Gasflaschen mit hohem Betriebsdruck, mit
einer Kompartimentträgerplatte, die mit dem Tragrahmen des Anhängers lösbar verbunden werden kann, mit Längskanten und zur Fahrtrichtung des Anhängers senkrechten Querkanten;
zwei jeweils endseitig an den Querkanten an der Kompartimentträgerplatte vorgesehenen Vertikalstrebenpaaren oder -platten;
einer Mehrzahl von mit Anschlussarmaturen versehenen und über Verbindungsleitungen miteinander verbundenen zylindrischen Gasflaschen; und
Verspannmitteln zum Verspannen der Gasflaschen an der Trägerplatte und gegeneinander,
wobei die Gasflaschen in horizontalen Lagen zwischen den Vertikalstreben auf der Trägerplatte aufliegen, wobei zwei horizontal benachbarte Lagen der Gasflaschen so gegeneinander versetzt sind, dass die Gasflaschen der oberen Lage in den zwischen den Gasflaschen der unteren Lage gebildeten Vertiefungen zu liegen kommen,
wobei die Gasflaschen senkrecht zu Längsachsen des Anhängers angeordnet sind, wobei nur die zwischen den Vertikalstrebenpaaren oder -platten in der obersten Lagen angeordneten Gasflaschen mittels eines Trägers zur Ausbildung einer starren Einheit lösbar miteinander verbunden sind.

Zur Verstärkung der Steifigkeit können die einzelnen Vertikalstreben beim Transportmodul bevorzugt an ihrem oberen Ende mittels Horizontalstreben verbunden sein, um die Steifigkeit eines Transportmoduls zu erhöhen. Wenn die einzelnen Kompartimente in der oben beschriebenen Transportmodulbauweise aufgebaut sind, ergibt sich somit für das einzelne Modul eine erhöhte Steifigkeit, und ein einzelnes Modul kann über an den oberen Enden der Vertikalstreben quer oder längs zur Fahrtrichtung festgelegten Horizontalstreben, an denen Angriffsmöglichkeiten für Kranhaken etc. vorgesehen sind, angehoben werden.

Die vorliegende Erfindung wird anhand der beigefügten Abbildungen näher erläutert.

Es zeigen:
Fig. 1 einen mit Gasflaschen beladenen Anhänger gemäß einer ersten bevorzugten Ausführungsform im Längsschnitt;
Fig. 2 einen mit Gasflaschen beladenen Anhänger gemäß einer zweiten bevorzugten Ausführungsform im Längsschnitt; und
Fig. 3 a und 3b einen Längsschnitt und einen Querschnitt eines Details eines mit Gasflaschen beladenen Anhängers gemäß einer dritten bevorzugten Ausführungsform.

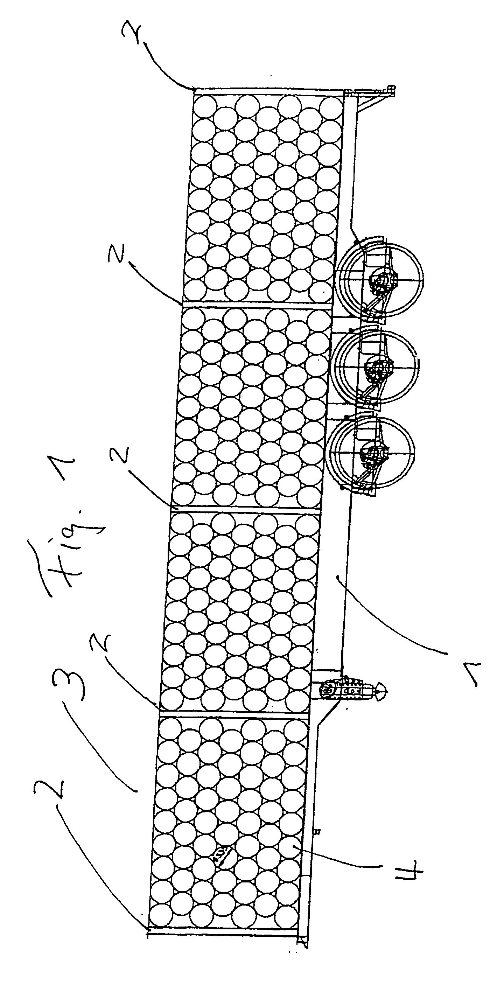

Gemäß Fig. 1 weist ein Anhänger zum Transport von Gasflaschen mit hohem Betriebsdruck einen Tragrahmen 1 auf und ist über fünf Vertikalstreben 2 in vier Kompartimente 3 unterteilt. Innerhalb eines Kompartiments 3 sind die einzelnen Lagen der Gasflaschen 4 in Seitenansicht dargestellt. Innerhalb eines Kompartiments 3 sind gemäß der dargestellten Flaschengröße sechzig Gasflaschen 4 angeordnet, was z.B. bei einer Füllmenge von etwa 30 m³ Wasserstoff bei 200 bar je Gasflasche 4 einer Nutzlast von etwa 600 kg Wasserstoff für den Anhänger entspricht. Über in Fig. 1 nicht dargestellte Spannorgane sind die Gasflaschen 4 innerhalb eines Kompartiments 3 gegen ein Verrutschen gesichert. Die Spannvorrichtungen sind am Tragrahmen 1 festgelegt und, falls erforderlich, an den Vertikalstreben 2 geführt.

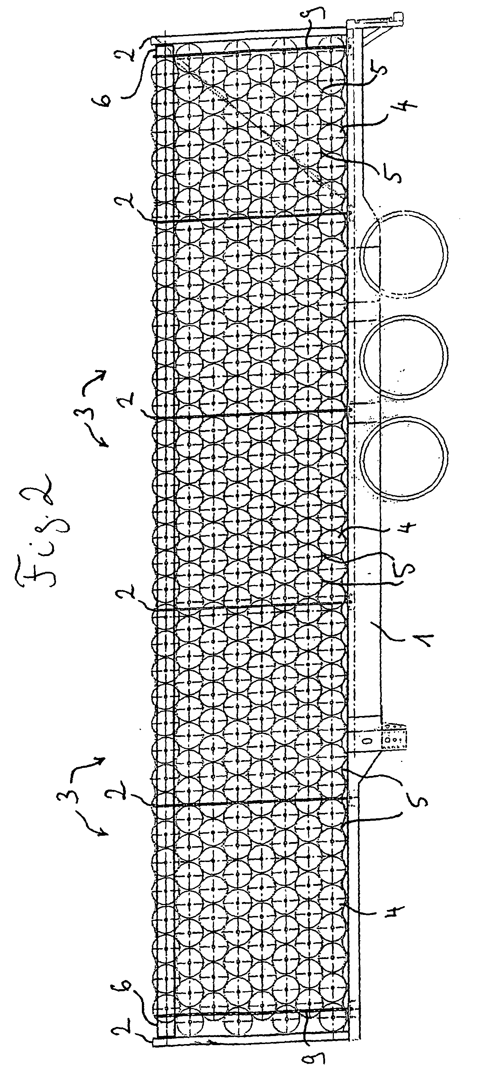

Der in Fig. 2 dargestellte Anhänger gemäß einer zweiten Ausführungsform entspricht weitgehend dem Anhänger gemäß Fig. 1, wobei die gleichen Elemente mit gleichen Bezugszeichen bezeichnet sind.

Gemäß Fig. 2 sind bei einem mit Gasflaschen 4 beladenen Anhänger zwischen den Gasflaschen 4 von in vertikaler Richtung benachbarten Lagen Abstandshalter 5 zum Ausgleichen einer thermischen Ausdehnung der Gasflaschen 4 vorgesehen, die gemäß dem Ausführungsbeispiel aus zwischen die Gasflaschen 4 gelegten Bändern aus einem flexiblen Schaum bestehen.

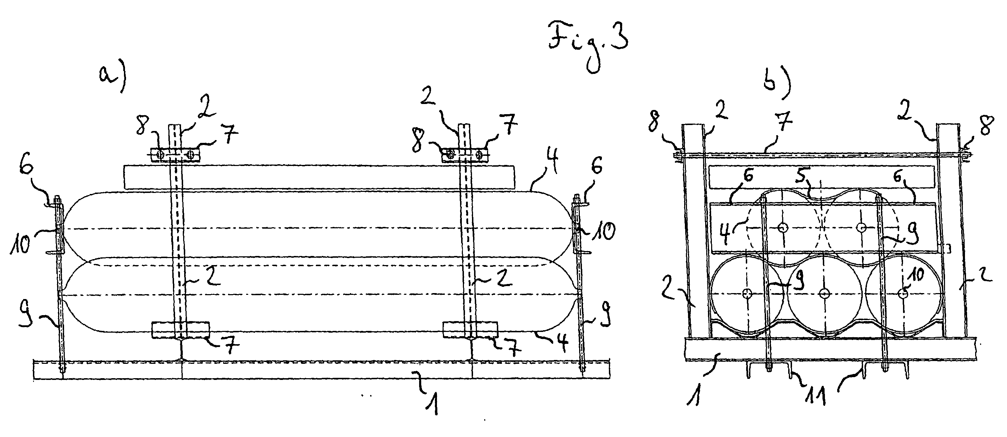

Ferner sind bei dem Anhänger gemäß Fig. 2 die zwischen den Vertikalstrebenpaaren oder -platten 2 in der obersten Lage angeordneten Gasflaschen 4 mittels einer Tragvorrichtung 6 in Form zweier an gegenüberliegenden Längsenden der jeweiligen Gasflaschen 4 angeordneten U-Träger zur Ausbildung einer starren Einheit lösbar miteinander verbunden. Die Ausgestaltung der U-Träger ist aus Fig. 3a und Fig. 3b ersichtlich. Statt der Anordnung eines U-Trägers an jedem der gegenüberliegenden Längsenden der Gasflaschen 4 kann jedoch auch nur ein U-Träger an einem der Längsenden der Gasflaschen 4 vorgesehen sein.

Bei dem in den Fig. 3a,b dargestellten Detail eines Anhängers sind zur Veranschaulichung des erfindungsgemäßen Prinzips nur zwei Lagen von Gasflaschen 4 dargestellt. Dabei sind die Vertikalstreben 2 zusätzlich oberhalb der obersten und unterhalb der untersten Lage der Gasflaschen 4 mittels Horizontalstreben 7 miteinander verbunden. Die Horizontalstreben 7 sind bei dem dargestellten Ausführungsbeispiel so ausgestaltet, dass sie die jeweiligen Vertikalstreben rahmenartig, d.h. mit zwei Längsträgern und zwei an diesen über Befestigungselemente 8 befestigten Querträgern, umgreifen.

Gemäß Fig. 3a,b ist die Trägervorrichtung 6 als U-Träger, d.h. mit einem U-förmigen Profil aus einem starren Material, wie z. B. Stahl, ausgebildet und über zwei am Rahmen 1 befestigte Führungsstangen 9 geführt.

Der U-Träger 6 weist in dem sich zwischen den beiden Schenkeln des U's benachbart zueinander und im Bezug auf die Schenkel mittig angeordnete Bohrungen auf, in denen die benachbarten Gasflaschen 4 der obersten Lagen mittels der an den jeweiligen Flaschenenden befindlichen Verbindungsstücke oder Ventile 10 verbunden sind. In dem in Fig. 3a dargestellten Ausführungsbeispiel erstreckt sich auf jeder Längsseite des Anhängers ein U-Träger 6 zwischen zwei Vertikalstreben 2, es kann jedoch auch gemäß Fig. 2 ein sich über mehrere Kompartimente 3 erstreckender U-Träger vorgesehen sein.

## Patentansprüche

1. Anhänger zum Transport von Gasflaschen mit hohem Betriebsdruck mit:
einem horizontalen Tragrahmen (1) mit Längskanten und zur Fahrtrichtung des Anhängers senkrechten Querkanten;
wenigstens zwei jeweils endseitig an den Querkanten am Tragrahmen (1) vorgesehenen Vertikalstrebenpaaren oder -platten (2);
einer Mehrzahl von mit Anschlussarmaturen versehenen und über Verbindungsleitungen miteinander verbundenen zylindrischen Gasflaschen (4); und
Verspannmitteln zum Verspannen der Gasflaschen (4) am Tragrahmen (1) und gegeneinander,
wobei die Gasflaschen (4) in horizontalen Lagen zwischen den Vertikalstrebenpaaren oder -platten (2) auf dem Tragrahmen (1) aufliegen, wobei zwei horizontal benachbarte Lagen der Gasflaschen (4) so gegeneinander versetzt sind, dass die Gasflaschen (4) der oberen Lage in den zwischen den Gasflaschen (4) der unteren Lage gebildeten Vertiefungen zu liegen kommen,
**dadurch gekennzeichnet, dass** die Gasflaschen (4) senkrecht zur Fahrtrichtung des Anhängers angeordnet sind, wobei nur die zwischen den Vertikalstrebenpaaren oder -platten (2) in der obersten Lage angeordneten Gasflaschen (4) mittels eines Trägers (6) zur Ausbildung einer starren Einheit lösbar miteinander verbunden sind.

2. Anhänger nach Anspruch 1, wobei der Träger (6) als U-Träger ausgebildet ist.

3. Anhänger nach Anspruch 1 oder 2, wobei die Vertikalstrebenpaare oder -platten (2) in Fahrtrichtung des Anhängers verschiebbar am Tragrahmen (1) befestigt sind.

4. Anhänger nach einem der vorhergehenden Ansprüche, wobei zwischen den Gasflaschen (4) von in vertikaler Richtung benachbarten Lagen Abstandshalter (5) zum Ausgleichen einer thermischen Ausdehnung der Gasflaschen (4) vorgesehen sind.

5. Anhänger nach einem der vorhergehenden Ansprüche, wobei die Abstände zwischen den Vertikalstreben oder -platten (2) so bemessen sind, dass sie einem Vielfachen des Flaschendurchmessers der Gasflaschen (4) entsprechen.

6. Anhänger nach einem der vorhergehenden Ansprüche, wobei die Gasflaschen (4) innerhalb eines Kompartiments (3) mittels umlaufender flexibler Spannorgane mit ihren jeweiligen Enden am Tragrahmen (1) befestigt sind.

7. Anhänger nach einem der vorhergehenden Ansprüche, wobei Sicherungsmittel zum Schutz der Anschlussarmaturen der Gasflaschen (4) vor mechanischer Krafteinwirkung vorgesehen sind, die den Raum zwischen den Vertikalstreben (2) und dem Tragrahmen (1) zumindest an der Anhängeraußenseite zumindest teilweise abdecken.

8. Anhänger nach Anspruch 7, wobei die Sicherungsmittel in Form von an den Vertikalstreben (2) über Scharniere angeschlagenen Türen, die sich seitwärts oder nach oben öffnen lassen, oder in Form von an oder in den Vertikalstreben (2) geführten Sicherheitsrolladen ausgebildet sind.

9. Anhänger nach einem der vorhergehenden Ansprüche, wobei entlang den Längskanten des Anhängers zumindest ein weiteres Vertikalstrebenpaar oder eine -platte (2) angeordnet ist, die den Anhänger in zumindest zwei Kompartimente (3) unterteilt.

10. Anhänger nach einem der vorhergehenden Ansprüche, wobei entlang der Längskanten des Anhängers drei weitere Vertikalstrebenpaare oder -platten (2) angeordnet sind, die den Anhänger zusammen mit den endseitig am Anhänger angeordneten Vertikalstrebenpaaren oder -platten (2) in insgesamt vier Kompartimente (3) unterteilen.

11. Anhänger nach Anspruch 9 oder 10, wobei die jeweils zwischen zwei Vertikalstrebenpaaren oder -platten (2) angeordneten Gasflaschen (4) mittels eines Trägers (6) zur Ausbildung einer starren Einheit miteinander verbunden sind.

12. Anhänger nach einem der vorhergehenden Ansprüche, wobei die Vertikalstrebenpaare oder -platten (2) lotrecht in zwei Elemente zweigeteilt sind und die Elemente jeweils mit ihren unteren Enden an den Ecken oder Querkanten jeweils einer Kompartimentträgerplatte festgelegt sind, wobei die Kompartimentträgerplatte jeweils mit dem Tragrahmen (1) lösbar verbunden ist.

13. Transportmodul für einen Anhänger zum Transport von Gasflaschen mit hohem Betriebsdruck mit:
einer Kompartimentträgerplatte, die mit dem Tragrahmen (1) des Anhängers lösbar verbunden werden kann, mit Längskanten und zur Fahrtrichtung des Anhängers senkrechten Querkanten;
zwei jeweils endseitig an den Querkanten an der Kompartimentträgerplatte vorgesehenen Vertikalstrebenpaaren oder -platten (2);
einer Mehrzahl von mit Anschlussarmaturen versehenen und über Verbindungsleitungen miteinander verbundenen zylindrischen Gasflaschen (4); und
Verspannmitteln zum Verspannen der Gasflaschen (4) an der Trägerplatte und gegeneinander,
wobei die Gasflaschen (4) in horizontalen Lagen zwischen den Vertikalstreben (2) auf der Trägerplatte aufliegen, wobei zwei horizontal benachbarte Lagen der Gasflaschen (4) so gegeneinander versetzt sind, dass die Gasflaschen (4) der oberen Lage in den zwischen den Gasflaschen (4) der unteren Lage gebildeten Vertiefungen zu liegen kommen,
**dadurch gekennzeichnet, dass** die Gasflaschen (4) senkrecht zu Längsachsen des Anhängers angeordnet sind, wobei nur die zwischen den Vertikalstrebenpaaren oder - platten (2) in der obersten Lagen angeordneten Gasflaschen (4) mittels eines Trägers (6) zur Ausbildung einer starren Einheit lösbar miteinander verbunden sind.

## Claims

1. Trailer for transporting gas bottles having high operating pressure having:
a horizontal carrier frame (1) having longitudinal edges and transverse edges perpendicular to the direction of travel of the trailer;
at least two vertical strut pairs or vertical plates (2) which are each provided at the end face on the transverse edges on the carrier frame (1);
a plurality of cylindrical gas bottles (4) which are provided with connection fittings and which are connected to each other via connection lines; and
clamping means for clamping the gas bottles (4) to the carrier frame (1) and relative to each other,
the gas bottles (4) being supported on the carrier frame (1) in horizontal layers between the vertical strut pairs or vertical plates (2), two horizontally adjacent layers of the gas bottles (4) being offset relative to each other in such a manner that the gas bottles (4) of the upper layer come to rest in the recesses formed between the gas bottles (4) of the lower layer,
**characterised in that** the gas bottles (4) are arranged perpendicularly to the direction of travel of the trailer, only the gas bottles (4) arranged in the uppermost layer between the vertical strut pairs or vertical plates (2) being releasably connected to each other by means of a carrier (6) in order to form a rigid unit.

2. Trailer according to claim 1, the carrier (6) being in the form of a U-shaped carrier.

3. Trailer according to claim 1 or 2, the vertical strut pairs or vertical plates (2) being secured to the carrier frame (1) displaceably in the direction of travel of the trailer.

4. Trailer according to any one of the preceding claims, there being provided spacers (5) between the gas bottles (4) of layers which are adjacent in a vertical direction in order to compensate for thermal expansion of the gas bottles (4).

5. Trailer according to any one of the preceding claims, the spacings between the vertical struts or vertical plates (2) being of such a size that they correspond to a multiple of the bottle diameter of the gas bottles (4).

6. Trailer according to any one of the preceding claims, the gas bottles (4) inside a compartment (3) being secured by the respective ends thereof to the carrier frame (1) by means of peripheral flexible clamping members.

7. Trailer according to any one of the preceding claims, securing means being provided to protect the connection fittings of the gas bottles (4) from the mechanical effect of forces and at least partially covering the space between the vertical struts (2) and the carrier frame (1) at least at the outer side of the trailer.

8. Trailer according to claim 7, the securing means being in the form of doors which are attached to the vertical struts (2) by means of hinges and which can be opened sideways or upwards, or in the form of safety shutters which are guided on or in the vertical struts (2).

9. Trailer according to any one of the preceding claims, at least one additional vertical strut pair or a vertical plate (2) being arranged along the longitudinal edges of the trailer and subdividing the trailer into at least two compartments (3).

10. Trailer according to any one of the preceding claims, three additional vertical strut pairs or vertical plates (2), which subdivide the trailer into a total of four compartments (3) together with the vertical strut pairs or vertical plates (2) which are arranged at the end face of the trailer, being arranged along the longitudinal edges of the trailer.

11. Trailer according to claim 9 or 10, the gas bottles (4) which are each arranged between two vertical strut pairs or vertical plates (2) being connected to each other by means of a carrier (6) in order to form a rigid unit.

12. Trailer according to any one of the preceding claims, the vertical strut pairs or vertical plates (2) being divided perpendicularly into two elements and the elements each being fixed with the lower ends thereof to the corners or transverse edges of a compartment carrier plate in each case, the compartment carrier plate being releasably connected to the carrier frame (1) in each case.

13. Transport module for a trailer for transporting gas bottles having a high operating pressure having:
a compartment carrier plate which can be releasably connected to the carrier frame (1) of the trailer, having longitudinal edges and transverse edges which are perpendicular to the direction of travel of the trailer;
two vertical strut pairs or vertical plates (2) which are each provided at the end face on the transverse edges on the compartment carrier plate;
a plurality of cylindrical gas bottles (4) which are provided with connection fittings and which are connected to each other by means of connection lines; and
clamping means for clamping the gas bottles (4) to the carrier plate and relative to each other,
the gas bottles (4) being supported on the carrier plate in horizontal layers between the vertical struts (2), two horizontally adjacent layers of the gas bottles (4) being offset relative to each other in such a manner that the gas bottles (4) of the upper layer come to rest in the recesses formed between the gas bottles (4) of the lower layer,
**characterised in that** the gas bottles (4) are arranged perpendicularly to longitudinal axes of the trailer, only the gas bottles (4) which are arranged in the uppermost layer between the vertical strut pairs or vertical plates (2) being releasably connected to each other by means of a carrier (6) in order to form a rigid unit.

## Revendications

1. Remorque pour le transport de bouteilles de gaz avec une pression élevée de fonctionnement, comportant :
un châssis de support horizontal (1) comportant des longerons et des traverses perpendiculaires à la direction de déplacement de la remorque;
au moins deux paires de montants verticaux ou deux plaques verticales (2) prévues respectivement aux extrémités des traverses sur le châssis de support (1);
une multiplicité de bouteilles de gaz cylindriques (4) pourvues d'organes de raccordement et reliées entre elles par des canalisations de liaison; et
des moyens de serrage pour serrer les bouteilles de gaz (4) sur le châssis de support (1) et les unes contre les autres,
dans laquelle les bouteilles de gaz (4) sont disposées sur le châssis de support (1) selon des couches horizontales entre les paires de montants verticaux ou les plaques verticales (2), deux couches voisines horizontalement des bouteilles de gaz (4) étant décalées les unes par rapport aux autres de telle sorte que les bouteilles de gaz (4) de la couche supérieure viennent s'appliquer dans les renfoncements formés entre les bouteilles de gaz (4) de la couche inférieure,
**caractérisée en ce que** les bouteilles de gaz (4) sont disposées perpendiculairement à la direction de déplacement de la remorque, auquel cas seule les bouteilles de gaz (4) disposées dans la couche la plus élevée entre les paires de montants verticaux ou les plaques verticales (2) sont reliées entre elles de façon amovible à l'aide d'un support (6) pour former une unité rigide.

2. Remorque selon la revendication 1, dans laquelle le support (6) est agencé sous la forme d'un support en U.

3. Remorque selon la revendication 1 ou 2, dans laquelle les paires de montants verticaux ou les plaques verticales (2) sont fixés au châssis de support (1) de manière à être déplaçables dans la direction de déplacement de la remorque.

4. Remorque selon l'une des revendications précédentes, dans laquelle entre les bouteilles de gaz (4) de couches voisines dans la direction verticale sont prévues des entretoises (5) servant à compenser une dilatation thermique des bouteilles de gaz (4).

5. Remorque selon l'une des revendications précédentes, dans laquelle les distances entre les montants verticaux ou les plaques verticales (2) sont dimensionnées de telle sorte qu'elles correspondent à un multiple du diamètre des bouteilles de gaz (4).

6. Remorque selon l'une des revendications précédentes, dans laquelle les bouteilles de gaz (4) sont fixées à l'intérieur d'un compartiment (3) à l'aide d'organes de serrage périphériques flexibles, au moyen de leurs extrémités respectives, sur le châssis de support (1).

7. Remorque selon l'une des revendications précédentes, dans laquelle des moyens de protection sont prévus pour protéger les organes de raccordement des bouteilles de gaz (4) vis-à-vis d'une action de force mécanique, ces moyens recouvrant au moins partiellement l'espace présent entre les montants verticaux (2) et le châssis de support (1) au moins sur le côté extérieur de la remorque.

8. Remorque selon la revendication 7, dans laquelle les moyens de protection sont agencés sous la forme de portes montées sur les montants verticaux (2) à l'aide de charnières et qui peuvent être ouvertes latéralement ou vers le haut,. ou sous la forme de stores de protection guidés sur ou dans les montants verticaux (2).

9. Remorque selon l'une des revendications précédentes, dans laquelle le long des longerons des bords longitudinaux de la remorque est disposée au moins une autre paire de montants verticaux ou une plaque verticale (2), qui divise la remorque en au moins deux compartiments (3).

10. Remorque selon l'une des revendications précédentes, dans laquelle le long des bords longitudinaux de la remorque sont disposées trois paires de montants verticaux ou trois plaques verticales supplémentaires (2), qui, conjointement avec les paires de montants verticaux ou plaques verticales (2) disposées au niveau des extrémités sur la remorque, divisent la remorque en un ensemble de quatre compartiments (3).

11. Remorque selon la revendication 9 ou 10, dans laquelle les bouteilles de gaz (4), disposées selon deux paires de montants verticaux ou deux plaques verticales (2), sont reliées entre elles au moyen d'un support (6) pour former une unité rigide.

12. Remorque selon l'une des revendications précédentes, dans laquelle les paires de montants verticaux ou plaques verticales (2) sont divisées verticalement en deux éléments et que les éléments sont fixés respectivement par leurs extrémités inférieures au niveau des coins ou des bords transversaux d'une plaque respective de support des compartiments, la plaque respective de support des compartiments étant reliée de façon amovible respectivement au châssis de support (1).

13. Module de transport pour une remorque pour le transport de bouteilles de gaz avec une pression élevée de fonctionnement, comprenant :
une plaque de support de compartiments, qui peut être reliée de façon amovible au châssis de support (1) de la remorque, comportant des bords longitudinaux et des bords transversaux perpendiculaires à la direction de déplacement de la remorque;
deux paires de montants verticaux ou deux plaques verticales (2) prévues respectivement au niveau des extrémités au niveau des bords transversaux sur la plaque de support de compartiment;
une multiplicité de bouteilles de gaz cylindriques (4) pourvues d'organes de raccordement et reliées entre elles au moyen de canalisations de liaison; et
des moyens de serrage pour serrer les bouteilles de gaz (4) sur la plaque de support et les unes contre les autres,
dans laquelle les bouteilles de gaz (4) s'appliquent sur la plaque de support selon des couches horizontales entre les montants verticaux (2), deux couches voisines horizontalement des bouteilles de gaz (4) étant décalées l'une par rapport à l'autre de telle sorte que les bouteilles de gaz (4) de la couche supérieure viennent se placer dans les renfoncements formés entre les bouteilles de gaz (4) de la couche inférieure,
**caractérisé en ce que** les bouteilles de gaz (4) sont disposées perpendiculairement à l'axe longitudinal de la remorque, auquel cas seules les bouteilles de gaz (4) disposées dans la couche la plus élevée entre les paires de montants verticaux ou les plaques verticales (2) sont reliées entre elles de façon amovible au moyen d'un support (6) pour former une unité rigide.
